# EUROPEAN PATENT APPLICATION

(11) **EP 2 551 107 A1**
(43) Date of publication of application: **30.01.2013**
(21) Application number: 11175969.2
(22) Date of filing: 29.07.2011
(51) Int. Cl.: B32B 27/00, B32B 37/00, B32B 37/15, B32B 37/02

(54) **Wall or floor covering for wet rooms, and method for manufactoring such a wall or floor covering**

(71) Applicant: Eterno Solutions AB, 702 27 Örebro (SE)
(72) Inventor: Högström, Bjarne, 616 90 Åby (SE); Sundberg, Jan, 702 28 Örebro (SE)
(74) Representative: Bokinge, Ole

(57) **Abstract**

The present disclosure relates to a laminated sheet for use in a wall or floor covering (100) in wet rooms. The laminated sheet comprises a porous mounting layer (1), adapted for being adhered to a support surface by means of a glue, and a polyolefin barrier film (3), effectively impermeable to water vapor. The laminated sheet further comprises a first joint layer (2) for joining the mounting layer (1) to the barrier film (2), the first joint layer (2) being melt coated onto the mounting layer, such that an integrated sheet (10) is formed, which presents a first face (11), consisting essentially of said mounting layer (1) and a second face (22) consisting essentially of said first joint layer (2). The second face (22) of the integrated sheet (10) is fused to the barrier film.

## Description

### Technical Field

The present disclosure relates to a covering for a floor or a wall in a wet room. In particular, the disclosure relates to a covering presenting a combination of good moisture and vapor barrier and a decorative surface.

### Background

Wet rooms present a problem to home owners and their insurers, since they account for a large volume of moisture related damages. Leakage of water, in liquid or vapor form, through joints, or even through the covering material, cause the coverings to disengage from their supporting surfaces and provides a starting point for microbial growth.

Traditionally in wet rooms, homogenous PVC (polyvinyl chloride) coverings have been used for floor and wall coverings. The coverings have been attached to the supporting surface in the form of a wall or subfloor by means of glue.

Using PVC as a decorative surface is highly desirable, since it can be dyed, printed and/or embossed to provide a desired decorative surface.

However, the vapor diffusion properties of PVC have proved insufficient, in particular in view of the ever increasing regulatory requirements solicited by e.g. the insurance industry.

Other requirements faced by the covering material include: being fastenable by means of an appropriate water based glue and being chemically weldable.

As of yet, there is, to the best of the present inventors' knowledge, no wall or floor covering for wet rooms available on the market, which meets the latest requirements for vapor barriers.

Hence, there is a need for an improved wall or floor covering for wet rooms.

### Summary

An object of the present disclosure is to provide a covering for a wet room wall or floor, which is capable of meeting the latest requirements on vapor barriers and long term properties.

The invention is defined by the appended independent claims, with embodiments being set forth in the dependent claims, in the following description and in the drawings.

According to a first aspect, there is provided a laminated sheet for use in a wall or floor covering in wet rooms. The sheet comprises a porous mounting layer, adapted for being adhered to a support surface by means of glue, and a polyolefin barrier film, which is effectively impermeable to water vapor. The sheet further comprises a first joint layer for joining the mounting layer to the barrier film. The first joint layer is melt coated onto the mounting layer, such that an integrated sheet is formed, which presents a first face, consisting essentially of said mounting layer and a second face consisting essentially of said first joint layer. The second face of the integrated sheet is fused against the barrier film.

By "effectively impermeable to water vapor" is meant that the barrier film presents a Z value according to EN ISO 12572 75/10 % rh of at least about 2,000,000, preferably of at least about 6,000,000.

Such a laminated sheet has proven to provide an excellent moisture barrier, and excellent adhesion properties to the support surface, also using existing water based or other in the market existing glues.

The mounting layer may consist essentially of a fibrous web.

The barrier film barrier film may comprise a high density polyethylene having a density of about 0.935 - 0.980 g/cm³.

The barrier film may be a film presenting a thickness of about 0.05-0.25 mm, preferably about 0.1-0.2 mm.

The barrier film may be a foil consisting of at least two laminated/coextruded layers.

The barrier film may comprise a first layer of high density polyethylene (normally as a core layer in a three layer structure), constituting about 25-80% the barrier film, and at least one more layer, which is adapted to provide improved adhesion against a third layer. Hence, at least one more layer may provide improved adhesion against an adhesive film and/or improved conditions for extrusion lamination.

The laminated sheet may further comprise a decorative layer, comprising polyvinyl chloride, and means for joining said decorative layer to said barrier film.

The decorative layer may present a printed and/or embossed face surface.

The joining means may comprise an adhesive foil having a first face presenting affinity to the material of the barrier film and a second face presenting affinity to the material of the decorative layer.

The joining means may comprise an extrusion laminated high content terpolymer, such as PE/EVA/MAAH or PE/EMA/MAAH. By high content, is meant a terpolymer containing more than 20% of the copolymer. Generally, the higher the content of the comonomer, the better the adhesive properties.

The joining means may comprise a porous web.

According to a second aspect, there is provided a covering for a wall or floor of a wet room, comprising a laminated sheet as described above.

Such a covering may be used as a moisture barrier on which a wall covering of stone, glass or ceramic tiles is mounted. As another alternative, the covering may, when provided with a decorative layer, form the base of a "wet room carpet".

According to a third aspect, there is provided a method for making a laminated sheet for use in a wall or floor covering in wet rooms. The method comprises providing a sheet web of a porous mounting layer, adapted for being adhered to a support surface by means of glue, providing a sheet of a polyolefin barrier film, which is effectively impermeable to water vapor. The method further comprises providing a first joint layer, melt coated onto the mounting layer, such that an integrated sheet is formed, which presents a first face, consisting essentially of said mounting layer and a second face consisting essentially of said first joint layer, and subsequently heat fusing the second face of the integrated sheet against the barrier film.

### Brief Description of the Drawings

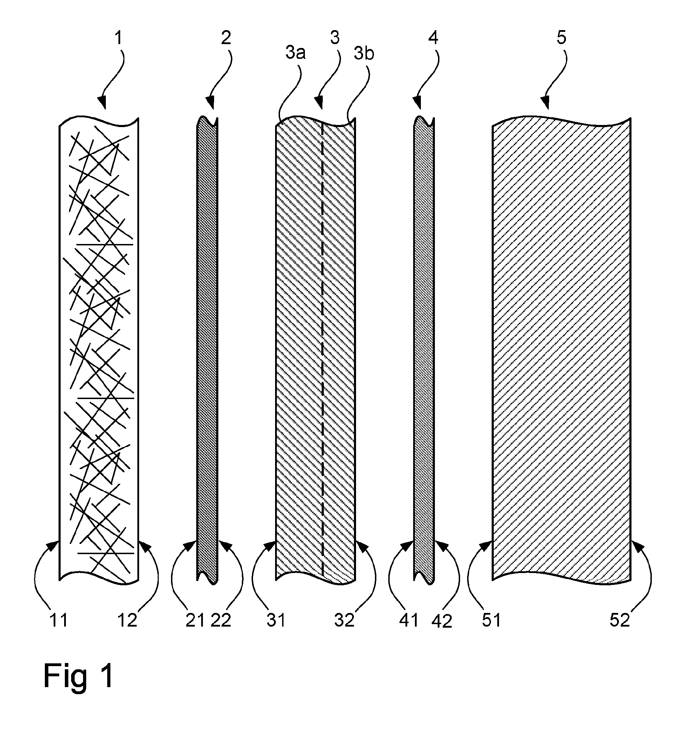

Fig. 1 is a schematic sectional view of the parts making up a covering according to an embodiment of the present disclosure.

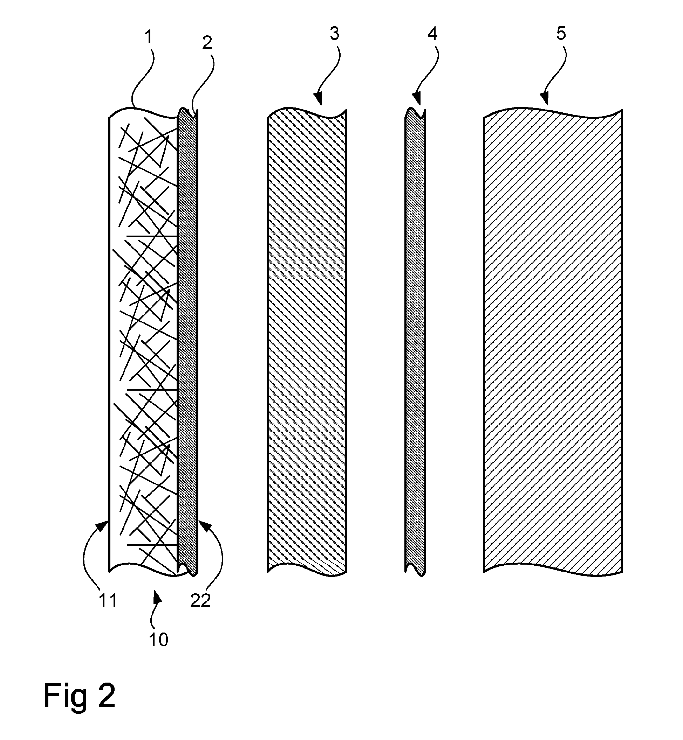

Fig. 2 is a schematic sectional view of the parts in Fig. 1, wherein the mounting layer and the joint layer have been integrated.

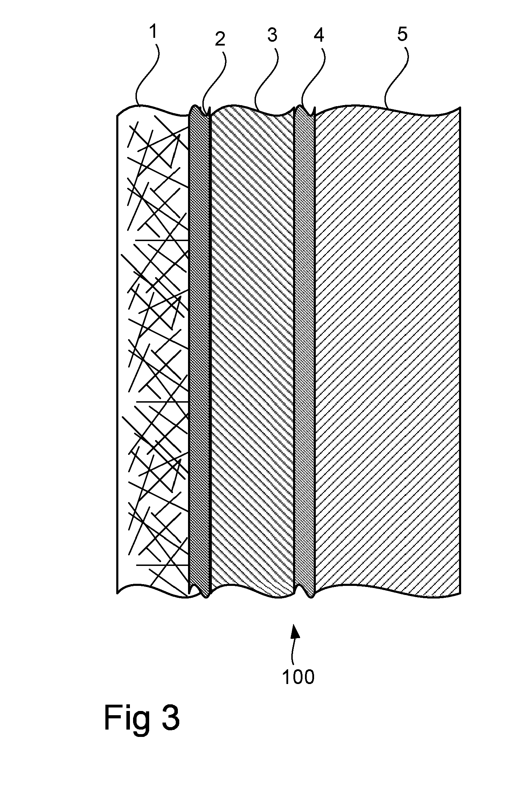

Fig. 3 is a schematic sectional view of a covering according to an embodiment of the present disclosure.

### Description of Embodiments

Initially, the individual layers and joining methods will be described. Subsequently, production methods will be outlined and specific examples provided.

### The mounting layer

A mounting layer 1 is provided to allow for the covering to be glued to a wall or a floor, but also to provide increased strength of the covering. The mounting layer presents a first side 11, which is to face the support surface (wall or floor) and a second side 12, which is to face the barrier foil 3.

The mounting layer 1 may be provided in the form of a fibrous web, such as a non-woven web. The web can be formed in any conventional way, e.g. as a staple non-woven, spunlaid non-woven or wet-laid non-woven.

The non-woven web may be bonded by means of heat bonding (welding, heat-curing and/or calendaring). Alternatively, or as a complement, the web may be entangled by means of ultrasound, needles or waterjet. Alternatively, or as a complement, chemical bonding may be used, e.g. by using a binder, as is known in the art of non-woven materials.

Suitable materials for the mounting layer 1 may be polyethylene or polypropylene based nonwoven or woven webs. A higher temperature resistance, as provided by polypropylene may be preferred in order to retain properties through a melt coating and/or lamination process.

The web material may be stabilized to counteract aging effects occurring over the life of the covering. Hence, the mounting layer may consist essentially of polyethylene and/or polypropylene, but for some additives and/or binders being provided.

### The Barrier Foil

The barrier foil 3 may be provided as a single layer foil or as a multi-layer foil, comprising e.g. two, three or four layers, each of which may be optimised to provide a respective function, such as adhesion, processability, strength or vapor proofness.

The barrier foil has a first side 31, facing the mounting layer 1 and a second side 32, facing the decorative foil 5. The barrier foil may have an overall thickness of about 0.050-0.25 mm, but typically about 0.1-0.2 mm.

In one embodiment, the barrier foil is a single layer foil formed of high crystalline or high density polyethylene, HDPE, having a density of about 0.935-0.980 g/cm³,

In another embodiment, the barrier foil is a multi-layer foil having a total proportion of HDPE in the range of 25-80 % forming a base layer 3a. By selecting e.g. certain surface layers 3b, the adhesion against one or more other layers of the covering may be improved.

This base layer 3a may have a thickness in the range of 0.020-0.16 mm, and typically in the range of 0.040-0.12 mm.

Such a foil may provide a barrier presenting a vapor diffusion resistance (Z value according to EN ISO 12572 75/10 % rh) in the area of 2,000,000 to 16,000,000.

### The Decorative Foil

The decorative foil 5 may be provided in the form of a foil consisting essentially of polyvinyl chloride (PVC) having weight of about 200-500 g/m². The thickness of the PVC foil may be in the order of about 0.1 to about 0.5 mm.

The decorative foil 5 has a first side 51 facing inwardly towards the barrier film 3 and a second side 52 forming an outer surface of the covering.

At the second side 52, the foil 5 may be embossed and/or printed or dyed. Alternatively, or as a complement, the decorative layer 5 may be dyed throughout.

The decorative foil 5 may be produced by calendering, extrusion or coating depending on what properties are desirable. The former two production methods typically provide a stronger material. These production steps may be modified to provide e.g. the embossed surface mentioned above.

The PVC may be provided with plastizisers, such as diethyl hexylphtalates (DEHP, DOP), diisononylphtalates (DINP), phenyl, alkyl sulphonic acid esthers or citric acid derivatives.

The decorative foil 5 may be provided as a substantially homogenous sheet, consisting of the same material throughout, except for any color or dye forming a pattern on the front side 52.

### Joining mounting layer to barrier film

In order to join the mounting layer to the barrier film, it is possible to coat the mounting layer with a foil, which may be fusible to the barrier film. This coating will be referred to as a first joint layer 2. This first joint layer presents a first side 21, which is to face the mounting layer 1 and a second side 22 which is to face the barrier foil 3.

For example, a web of mounting layer may be extrusion coated with an HDPE, which may be the same as, or similar to, that of the barrier film 3. In any event, this HDPE may have a density of 0.935-0.980 g/cm3. The first joining layer 2 may be 0.010-0.050 mm thick and preferably 0.025-0.040 mm.

### Joining barrier foil to decorative foil

The joining of the decorative foil to the barrier foil presents a challenge since the decorative foil, which is of PVC, is of a polar natur and the barrier foil, which is a polyolefin, is of a fatty nature.

One solution is fo provide an adhesive foil 4 or "glue foil" presenting sides 41, 42 having affinity towards the polyolefin and the PVC, respectively.

Examples of polymers which are able to bind against PVC in different degrees includePU(polyurethane), CoPES(polyester), CoPA(polyamide),PA, EVA (ethylene vinyl acetate (> 20 mol % vinylacetate)), EBA(ethylenebutylacrylate copolymer), EMA(ethylene metylacrylate),and otherl copolymers of ethylene having a high content similar comonomers. Moreover, terpolymers containing e.g. MAAH as adhesion improving agennts are possible to use to increase joint strength against PVC. However, the usefulness may be limited since a high share of co- or terpolymers decrease the useful temperature, i.e. vicat softening points and melting temperatures, and in some cases reduce the tolerance against alkalines.

Examples of adhesive foils include films of PES(polyester)/- PE(polyethylene), PA(polyamide)/PE ,EVA(ethylene-vinyl acetate)/PE, or EVA/EVA, or similar copolymers or terpolymers. In most cases, a foil would provide an intermediate layer, adhering the two outer layers to each other.

It is important that the joint strength be made sufficiently high to meet the demands on alkaline resistance and oxidative aging: heat aging at 70 degrees Celsius for four weeks and aging in Ca(OH)₂ (strongly alkaline, pH > 13) at elevated temperature for four weeks.

Another option is to extrusion laminate a terpolymer such as PE/EVA/MAAH, PE/EMA/MAAH,or the like, between the barrier and decorative foils 3, 5. Examples of currently commercially available terpolymers include LOTADER® 4503 (provided by Arkema,FR) and BYNEL® (provided by E. I. du Pont de Nemours and Company, MD).

Yet another option is to provide a fiber web (woven or non-woven), which may be arranged to act as an intermediate between the barrier foil 3 and the decorative foil 5.

In one embodiment, the barrier foil is provided with nonwoven webs on both its surfaces 3a, 3b. A hot melt foil, such as e.g. polyurethane, or any other foil with an affinity for the decorative foil 5 may be fused to the web which is exposed at the surface 3b, this foil then being laminated to the decorative foil 5. In such a case, the thickness of the polyurethane foil may need to be significant in order to provide a strong enough "body" to mechanically bond the fiber to the polymer.

As another option, the decorative foil 5 may be heat laminated against the web which is exposed at the surface 3b.

In another embodiment, the decorative foil may be extruded or produced directly onto a web (woven or nonwoven), such that the surface 51 of the decorative foil is caused to present a fibrous structure. This fibrous structure may be heat laminated against the surface 3b of the barrier foil 3.

In yet another embodiment, the barrier foil 3 or the decorative foil 5 may be provided with a web (woven or nonwoven), and an extrusion laminate, as described above, may be provided between the web and the other one of the foils. For example, where the barrier foil is provided with a web at the surface 3b, the extrusion coating may be provided between this web and the decorative foil 5.

Another solution may be to provide a solvent-based adhesive between the barrier foil 3 and the decorative foil 5.

The description will now be directed towards a non-limiting method for producing a laminate according to the present disclosure.

A porous web 1, such as a thin, preferably pre-bonded, nonwoven web, is provided. The web may be provided from a roll, in order to facilitate its handling.

The web is fed into a coating device, where its surface is extrusion coated with a thermoplastic polymer resin 2, such as polyethylene or polypropylene, thereby forming an integrated sheet 10 having one face 11 essentially exposing the web and another face 22 essentially exposing the polymer resin. The integrated sheet 10 may be wound to form a second roll. It is recognized that this process may be performed in a substantially continuous manner.

Hence, the integrated sheet 10 may be seen as a first intermediate product.

A barrier foil 3 may be provided, typically also from a roll, for lamination to the integrated sheet.

The barrier foil 3 and the integrated sheet may be fed into a lamination device with the polymer resin side 2b facing the barrier foil 3, whereby the barrier foil 3 is laminated to the integrated sheet.

It is recognized that the lamination of the web 1, the polymer resin 2 and the barrier foil 3 may take place in a single step or as successive steps in a production process.

Hence, the integrated sheet with the barrier foil laminated to it may be seen as a second intermetidate product.

A decorative foil 5 may then be provided, typically also from a roll. The decorative foil 5 may be pre-provided with a decorative dye, pattern and/or embossing.

An adhesive foil 4 may be provided, possibly also from a roll. The integrated sheet/barrier foil, the adhesive foil 4 and the decorative foil 5 may be fed into a lamination device, possibly continuously, in order to provide the end product, a covering 100 for a wet room wall or floor.

It is noted that all layers 1, 2, 3, 4, 5 may be laminated in a single process in order to provide the end product. However, it may be advantageous to provide the integrated sheet/barrier foil (second intermediate product) for separate storage, since this component will be the same for all products, and then to produce smaller batches of different decorative foils 5, thus providing smaller series of coverings having different appearances.

By age stabilizing all parts of the laminate structure, the laminate can be made to withstand the aging and long time stability requirements of the market. Stabilization for olefins can be achieved by known and generally accepted methods, such as HALS (hindered amines), Hostavin N 30 (Clariant master batches), Chimasorb 944 (BASF) or Irgastab FS 301. I The PVC layer may be stabilized with other systmes such as BA/Zn systems, organo tin systems, or epoxidized soy bean oils, etc.

### Example 1

A laminate was formed of a decorative foil, a barrier foil and a mounting layer.

The decorative foil was a PVC made by Gislaved folie stablized with epoxidized soy bean oil/ BA-Zn,and plastiziced with phenyl-alkyl sulfonic ester..

The barrier foil was provided in the form of a a 0.160 mm thick three layer foil comprising LDPE (Borealis 5223), HDPE (Sabic F04660) and LDPE (Borealis 5223).

The mounting layer was a 50 g/m² nonwoven polypropylene web (Berotex TY).

A HDPE 30 g/m² (Borealis GC 8410) was heat laminated against the mouting layer to provide an integrated sheet. Normal extrusion temperatures was used, i.e. 270-320 °C, preferably 270-300 °C, due to the risk of laminate shrinking, but still maintaining perfect wetting of the fiber, and fusion to barrier.

The HDPE was fused against the barrier foil by means of an extrusion coating process, through which the barrier and the non woven layers were excellently adhered to each other.

A two-sided 45 g/m² foil, LC2 from Protechnic FR, consisting of a hotmelt based polyamide (such as Griltex range from EMS Chemie ,CH) and an olefin based terpolymer f was used to join the decorative foil to the barrier foil.

The materials were heat laminated at about 130-140 °C (preferably in the lower end to reduce impact on embossing and avoid shrinkming), to form an integral structure. The structure was exposed to 50 degrees Celsius in a saturated Ca(OH)₂ solution during 16 weeks (EN 1847) and subsequently the material was exposed to 70 degrees in an oven for 4 weeks (EN 1296).

After the exposure, the material was intact and met the requirement of less than 20% change of mechanical properties.

### Example 2

A laminate was formed of a decorative foil, a barrier foil and a mounting layer.

The decorative foil was an embossed 350 g/m² PVC foil plasticized by alkyl sulphonic acid esther from Gislaved Folie AB, i.e. same as in example 1.

The barrier foil was of the same type as in Example 1.

The mounting layer was the same as in Example 1.

The barrier foil was coated on both sides with a 30 g/m² polypropylene nonwoven, in the manner disclosed in Example 1.

The decorative foil was laminated to the nonwoven coated barrier foil in a hot press with a 0.1 mm Estane 58271 polyurethane foil (Lubrizol) at 150 degrees Celsius.

The structure was exposed to the same tests as in Example 1, and was found to meet the requirements.

It should be noticed that the herein disclosed methods of laminating the decorative foil to the barrier foil may be used independently of the methods of laminating the mounting layer to the barrier foil.

## Claims

1. A laminated sheet for use in a wall or floor covering (100) in wet rooms, comprising:
a porous mounting layer (1), adapted for being adhered to a support surface by means of glue, and
a polyolefin barrier film (3), effectively impermeable to water vapor, **characterized by**
a first joint layer (2) for joining the mounting layer (1) to the barrier film (3),
the first joint layer (2) being melt coated or extruded onto the mounting layer (1), such that an integrated sheet (10) is formed, which presents a first face (11), consisting essentially of said mounting layer (1) and a second face (22) consisting essentially of said first joint layer (2),
wherein the second face (22) of the integrated sheet is fused to the barrier film (3).

2. The laminated sheet as claimed in claim 1, wherein the mounting layer (1) consists essentially of a fibrous web.

3. The laminated sheet as claimed in claim 1 or 2, wherein the barrier film (3) comprises a high density polyethylene having a density of about 0.935 - 0.980 g/cm³.

4. The laminated sheet as claimed in any one of the preceding claims, wherein the barrier film (3) presents a thickness of about 0.05-0.25 mm, preferably about 0.1-0.2 mm.

5. The laminated sheet as claimed in any one of the preceding claims, wherein the barrier film (3) is a foil consisting of at least two laminated layers (3a, 3b).

6. The laminated sheet as claimed in claim 5, wherein the barrier film (3) comprises a first layer (3a) of high density polyethylene, constituting about 25-80% the barrier film, and a second layer (3b), which is adapted to provide improved adhesion against a third layer (4, 5).

7. The laminated sheet as claimed in any one of the preceding claims, further comprising:
a decorative layer (5), comprising polyvinyl chloride, and
means for joining said decorative layer (5) to said barrier film (3).

8. The laminated sheet as claimed in claim 7, wherein said decorative layer (5) presents a printed and/or embossed face surface (52).

9. The laminated sheet as claimed in claim 7 or 8, wherein said joining means comprises an adhesive foil (4) having a first face (41) presenting affinity towards the material of the barrier film (3) and a second face (42) presenting affinity towards the material of the decorative layer (5).

10. The laminated sheet as claimed in claim 7 or 8, wherein said joining means comprises an extrusion laminated high content terpolymer, such as PE/EVA/MAAH or PE/EMA/MAAH.

11. The laminated sheet as claimed in any one of claims 7-10,
wherein said joining means comprises a porous web.

12. A covering (100) for a wall or floor of a wet room, comprising a laminated sheet as claimed in any one of the preceding claims.

13. A method for making a laminated sheet for use in a wall or floor covering (100) in wet rooms, comprising:
providing a porous mounting layer (1), adapted for being adhered to a support surface by means of glue,
providing a polyolefin barrier film (3), which is effectively impermeable to water vapor,
**characterized by**
providing a first joint layer (2), melt coated or extruded onto the mounting layer (1), such that an integrated sheet (10) is formed, which presents a first face (11), consisting essentially of said mounting layer and a second face (22) consisting essentially of said first joint layer (2), and
subsequently fusing the second face (22) of the integrated sheet (10) to the barrier film (3).
